# EUROPEAN PATENT SPECIFICATION

(11) **EP 2 074 799 B1**
(45) Date of publication and mention of the grant of the patent: **30.03.2011**
(21) Application number: 07818602.0
(22) Date of filing: 01.10.2007
(51) Int. Cl.: H04L 29/06, H04L 12/56

(54) **METHOD AND APPARATUS FOR MOBILE IP ROUTE OPTIMIZATION**
VERFAHREN UND VORRICHTUNG ZUR MOBIL-IP-ROUTENOPTIMIERUNG
PROCÉDÉ ET APPAREIL POUR L'OPTIMISATION DE TRAJET IP MOBILE

(30) Priority: 10.10.2006 EP 06021275
(43) Date of publication of application: 01.07.2009
(60) Divisional application: 11001191.3
(73) Proprietor: Panasonic Corporation, Kadoma-shi Osaka 571-8501 (JP)
(72) Inventor: SCHURINGA, Jon, 63225 Langen (DE); BACHMANN, Jens, 63225 Langen (DE); VELEV, Genadi, 63225 Langen (DE); WENIGER, Kilian, 63225 Langen (DE)
(74) Representative: Grünecker, Kinkeldey, Stockmair & Schwanhäusser Anwaltssozietät
(86) International application number: PCT/EP2007/008522
(87) International publication number: WO 2008/043449

(56) References cited:
- FENG BAO ROBERT DENG YING QIU JIANYING ZHOU: "Improvement of Return Routability Protocol" IETF STANDARD-WORKING-DRAFT, INTERNET ENGINEERING TASK FORCE, IETF, CH, no. 1, 8 March 2005 (2005-03-08), XP015039580 ISSN: 0000-0004
- ZHAO S F WU UC DAVIS S JUNG SOONGSIL UNIVERSITY F: "Extensions on Return Routability Test in MIP6" IETF STANDARD-WORKING-DRAFT, INTERNET ENGINEERING TASK FORCE, IETF, CH, no. 1, 21 February 2005 (2005-02-21), XP015039910 ISSN: 0000-0004

## Description

### Field of the Invention

The invention relates to optimized routing in mobile packet-based communication networks.

This invention describes a method, mobile node, home agent, system and computer readable medium that enables a Mobile lPv6 (Internet Protocol version 6) mobile node to reduce signalling messages during route optimisation to a correspondent node and at the same time maintains security.

### Technical Background

The invention is described for the example of the Internet Protocol version 6 (lPv6). It is, however, also applicable to other protocols defining equivalent entities corresponding to the described entities of IPv6.

The same basic components exist in MlPv6 as in MlPv4, except there are no foreign agents in MlPv6. While a mobile node is at home, packets addressed to its home address are routed to the mobile node's home link, using conventional Internet routing mechanisms. When a mobile node (MN) moves to a foreign link, the MN will receive a care-of-address (CoA) using stateless or stateful autoconfiguration. The MN will then send a binding update to the Home Agent (HA) with the MN's new CoA for use while roaming.

There are two ways to handle packet forwarding between correspondent nodes (CNs) and MNs, route optimization mode and bidirectional tunneling mode. In route optimization mode type 2 routing header are used, MlPv6 functionality on the CN is required, initial packets are routed from the CN to the MN via the HA, the MN replies to the CN directly, and the CN does a binding cache update for MN's new CoA, and subsequent packets between CN and MN are routed directly with no interaction needed on the HA.

Mobile Nodes (MN) using Mobile IP are still reachable when they are away from their home link. The Home Agent (HA) forwards packets for the MN towards the location where the MN resides. Also packets from the MN towards corresponding nodes flow through the HA. Thus, the HA forwards traffic back and forth between corresponding nodes and mobile nodes that are away from home. Clearly, this approach is not optimal since the packets travel a longer route than strictly necessary. For this purpose, a technique called Route Optimization can be used.

Part of the Route Optimization process is the Return Routability (RR) protocol. This enables a Correspondent Node (CN) to obtain some reasonable assurance that a mobile node is in fact addressable at its claimed Care-of Address (CoA) as well as at its Home Address (HoA). Only with this assurance is the correspondent node able to accept Binding Updates from the mobile node, which would then instruct the correspondent node to direct that mobile node's data traffic to its claimed care-of address. The binding update messages are protected using a session key generated during the process.

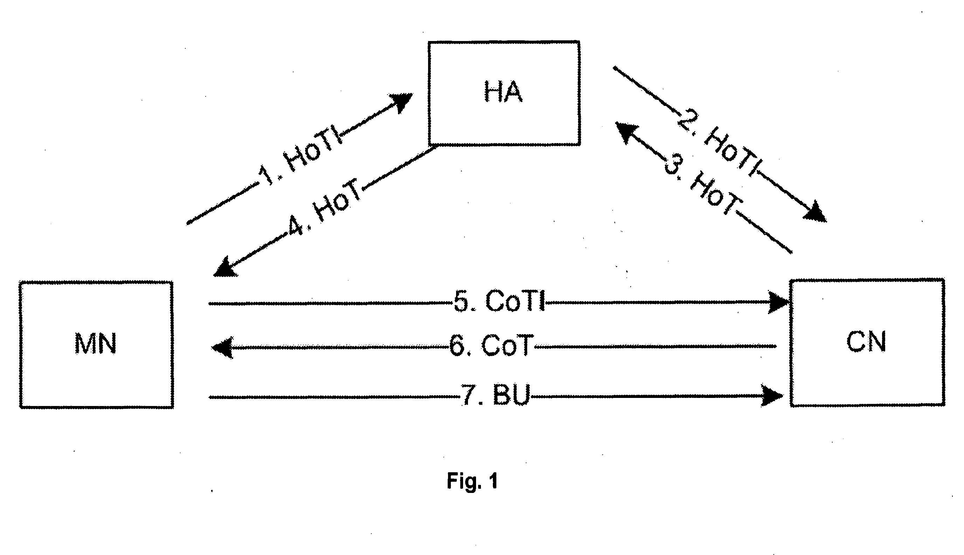

The Return Routability protocol can be used in a scenario where the MN is registered at two home agents. It is then possible, using the standard RR protocol, to redirect the flow between the MN and CN from one HA to another HA (see Fig. 1). This can serve different purposes like route optimization with location privacy support, or to overcome IP version incompatibilities. It is exactly in this scenario where the route optimization process can be optimized.

In the following, two related solutions in the prior art will be discussed, the first is the standard mobile IP method to redirect the traffic from one HA to another HA, and the second is Proxy MIP where the MN is not actively involved in any mobile IP related messaging.

The standard route optimization process in defined in RFC 3775. As stated before, this standard can be used to redirect traffic from one HA to anther HA. The messages involved are shown in Fig. 1 and are described in more detail below:

### HoTI (Home Test Init) Message:

When a mobile node wants to perform route optimization it sends a HoTl message to the correspondent node in order to initiate the return routability verification for the Home Address. This message tells the mobile node's home address to the correspondent node. The mobile node also sends along cookie C0 that the correspondent node must return later, along with a nonce index (an index of numbers used once) and a token that it generates based on the home address. The HoTI message is reverse tunnelled through the Home Agent.

### HoT (Home Test) Message:

When the correspondent node receives the HoTl message, it generates a token K0 and send it to the mobile node via the Home Agent; it is an assumption of the protocol that the home agent - mobile node HoT/HoTi signalling is encrypted. K0 acts as a challenge to test that the mobile can receive messages sent to its home address. A security key (Kcn) and a nonce is used in the production of K0 in order to allow the correspondent node to verify that the tokens used later really came from itself, without forcing the correspondent node to remember a list of all tokens it has handed out. Cookie C0 from the mobile node is returned as well in the HoT message, to ensure that the message comes from someone on the path towards the correspondent node.

### CoTI (Care-of Test Init) Message:

When a mobile node wants to perform route optimization it sends a CoTI message to the correspondent node in order to initiate the return routability verification for the care-of address. This message can be sent in parallel with HoTI. A CoTI tells the correspondent node the mobile node's care-of address. The mobile node also sends along cookie C1 that the correspondent node must return later, along with the token that it generates based on the care-of address. The CoTI message is sent directly to the CN.

### CoT (Care-of Test) Message:

This message is sent in response to a CoTI message. When the correspondent node receives the CoTI message, it generates a token K1 and sends it to the mobile node. Cookie C1 from the mobile node is returned as well, to ensure that the message comes from someone on the path towards the correspondent node.

### BU (Binding Update) Message:

When the MN has received both the HoT and CoT it has the tokens and nonce indices necessary to authenticate the Binding Update. The mobile node hashes together the challenges to form a session key (Kbu), and then uses this session key to authenticate a binding update.

Once the correspondent node has verified the BU, it can create a binding cache entry for the mobile.

### BA (Binding Acknowledgement) Message:

The correspondent node optionally acknowledges the Binding Update. It uses the same key (Kbu) to authenticate a binding acknowledgement.

### BR (Binding Request) Message:

The correspondent node can optionally request a binding to be refreshed using the Binding Request message. This message can be authenticated using C2 from the Binding Update, and the Kbu that was created earlier. It should be noted that one of the design goals of RO was to have the same level of security as in normal IP. This means that only nodes on the path between correspondent node and home network can disrupt traffic.

The second prior art is Proxy Mobile IP, which allows any mobile node to connect to the network and be mobile without Mobile IPv6 in the mobile node and without losing its layer 3 connectivity or having to perform additional signalling to maintain layer 3 connectivity during handoffs. In Proxy Mobile IP all mobility functions are located in the network. Currently, no route optimization is used/specified in Proxy Mobile IP and the MN has no control over this.

The problem when using the standard route optimization procedure for redirecting traffic from one HA to another is the number of messages needed to and from the MN. Since these messages are transmitted over the scarce air interface bandwidth, and these messages must be repeated every 7 minutes for each CN, it places a significant burden on the air interface.

Furthermore, since many MNs are battery powered, each message sent by the MN that can be avoided is a clear benefit. Longer idle periods at the MN also allow longer dormant modes at the MN, thus saving energy.

However, each message in the RO process has its own goal, as described above, and these are all related to security.

Prior art document "Improvement of return Routability Protocol", Feng Bao at al., published as IETF working draft an 8th March 2005, discloses the use of a modified HoTi message where both the CoA and the HoA are included in order to couple them and reinforcing the RR protocol against malicious attacks.

### Summary of the Invention

The object of the invention is to provide increased efficiency of communications of a mobile node while maintaining the same level of security as in standard Route Optimisation.

The object is solved by the subject matter of the independent claims. Advantageous embodiments of the invention are subject matters to the dependent claims.

To achieve this object, the present invention provides a method, and a mobile node for route optimisation between a mobile node and at least one correspondent node in a packet switched network, wherein a route via a first home agent is redirected via a second home agent. The method comprises the steps of: sending by the mobile node an extended home test initiation message comprising following information: authentication data, an address of the correspondent node, a first home address and a second home address and receiving the extended home test initiation message by the first home agent. The first home agent sends an extended home test message to the second home agent, the extended home test message comprising the information from the extended home test initiation message and the extended home test message is received by the second home agent. A communication is routed between the mobile node and the at least one correspondent node via the second home agent.

According to an advantageous embodiment the method further comprises the following steps before the step of sending an extended home test message to the second home agent: storing the information from the extended home test initiation message by the first home agent; sending a home test initiation message to the at least one correspondent node by the first home agent using a first home address of the mobile node; and intercepting by the first home agent a home test message sent by the at least one correspondent node and verifying its correctness.

Another embodiment of the invention relates to the extended home test message further comprising information from the home test message.

In another embodiment of the invention before a communication is routed between the mobile node and the at least one correspondent node via the second home agent, a care-of test initiation message to the at least one correspondent node is sent by the second home agent; a care-of test message addressed to the second home address, which was sent by the at least one correspondent node, is intercepted by the second home agent; and a valid binding update message is sent to the at least one correspondent node.

An advantageous aspect of the invention is that the extended home test initiation message comprises values for options used in a binding update message.

According to another embodiment of the invention messages between the mobile node, the first home agent, the second home agent and the correspondent node are encrypted.

A further embodiment of this invention further comprises the step of digitally signing data in the extended home test initiation message using a security key from a security association between the mobile node and the second home agent.

In another advantageous embodiment of this invention the step of digitally signing comprises using a sequence number or a time stamp.

Another embodiment of the invention further comprises the steps of receiving by the first home agent or the second home agent a returned cookie sent by the at least one correspondent node; and checking by the first home agent or by the second home agent whether the returned cookie is the cookie that was generated by the first home agent or the second home agent, respectively.

In another aspect of the invention the step of sending the home test initiation message is performed simultaneously with sending by the first home agent an extended care-of test initiation message to the second home agent.

In a variation of this embodiment of the invention the steps of intercepting by the first home agent the home test message and sending by the second home agent the care-of test initiation message are performed simultaneously and the step of sending an extended home test message and intercepting by the second home agent a care-of test message are performed simultaneously.

In a further advantageous embodiment of the invention the step of storing the information from the extended home test initiation message by the first home agent comprises storing the information in a table, wherein each entry of the table comprises fields needed for each of the at least one correspondent nodes.

In another embodiment of the invention the fields of the table comprise an address of a correspondent node, the second home address, binding update options and authentication information.

### Brief Description of the Drawings

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention as illustrated in the accompanying drawings, wherein
- Fig. 1: depicts standard Mobile IP Route Optimization;

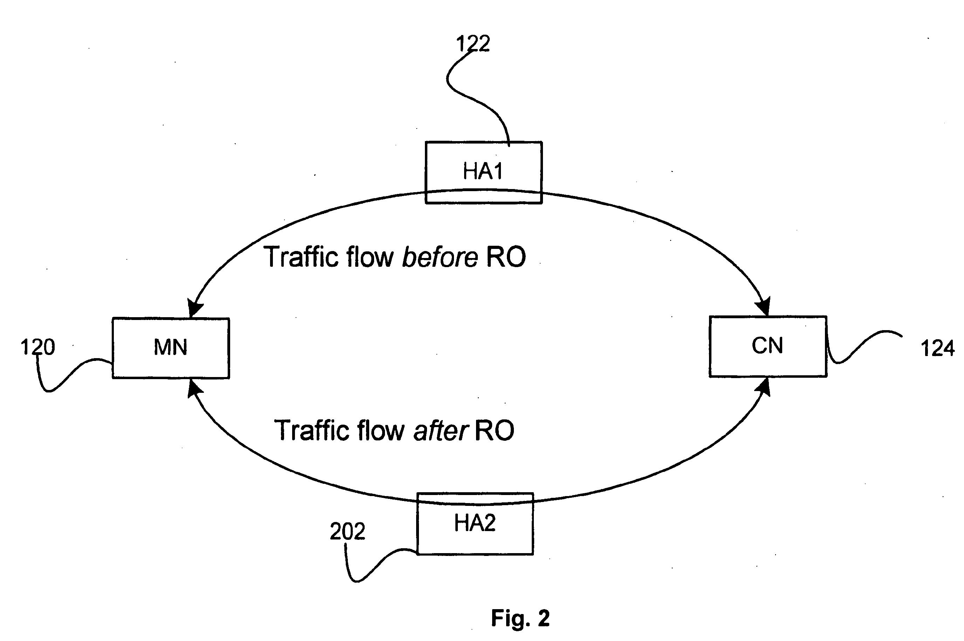

- Fig. 2: shows how user traffic flows before and after the Route Optimization;
- Fig. 3: shows the standard Route Optimization procedure when two home agents are involved;
- Fig. 4: shows the messages involved in the invention's RO procedure;
- Fig. 5: shows an embodiment of the invention, in which the messages are sent in parallel;
- Fig. 6: is a flow diagram showing a time comparison of the serial and parallel method;
- Fig.7: shows an embodiment of the invention in which multiple RO procedures to different CNs are initiated by a single message from the MN; and
- Fig. 8: shows a variation of an embodiment, using multiple bindings per MN at the HA.

### Detailed Description of the Invention

The illustrative embodiments of the present invention will be described with reference to the figure drawings wherein like elements and structures are indicated by like reference numbers. The following paragraphs will describe various embodiments of the invention. For exemplary purposes only, most of the embodiments are outlined in relation to a MlPv6 communication system and the terminology used in the subsequent sections mainly relates to the MlPv6 terminology. However, the terminology used and the description of the embodiments with respect to an MlPv6 architecture is not intended to limit the principles and ideas of the inventions to such systems.

Also the detailed explanations given in the Technical Background section above are merely intended to better understand the mostly MIPv6 specific exemplary embodiments described in the following and should not be understood as limiting the invention to the described specific implementations of processes and functions in the packet switched communication network.

The present invention provides a method to significantly reduce the signalling messages to and from the mobile node during mobile IP route optimization. This method can be used for mobile nodes that are registered at multiple home agents. To maintain the same level of security and robustness as in standard mobile IP, certain security mechanisms like authentication need to be added or changed.

The main idea is to let two HAs together perform the RO procedure on behalf of the MN, where the MN only triggers the process with one message. Additionally, the existing two security associations between MN and both HAs are used to provide the required level of security. A security relation between both HAs is not necessary.

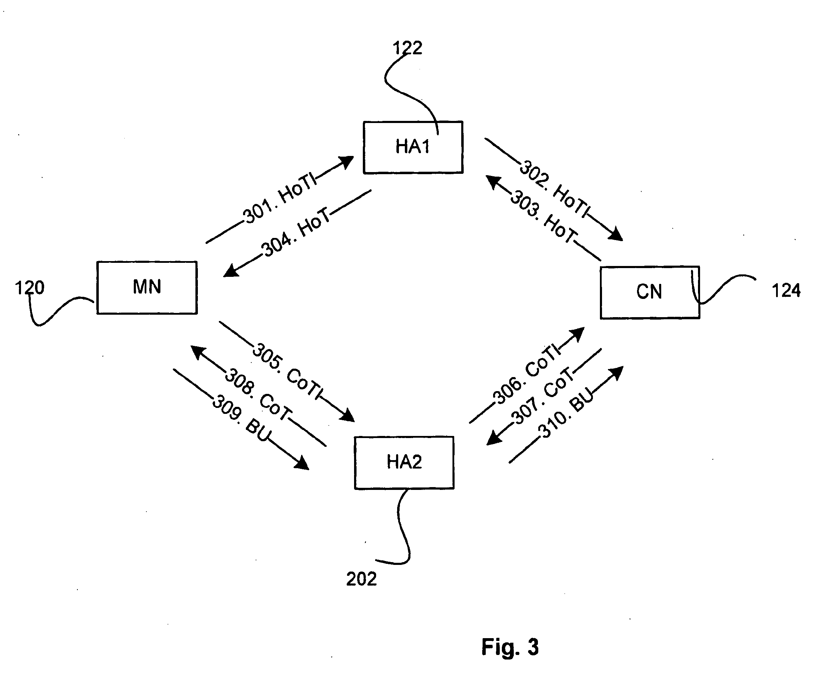

Fig. 3 shows a legacy system where the MN 120 initiates route optimization with a CN 124 via a second HA 202. Multiple reasons could exist for having the second HA 202: it could for instance be used to provide location privacy, or to overcome IP version incompatibilities.

The goal of the RO procedure as shown in Fig. 3 is to change the user data path between MN 120 and CN 124 from HA1 122 to HA2 202. Note that "normal" RO is used to allow MN 120 and CN 124 to communicate directly with each other (without any HA intervention).

The RO procedure as illustrated in Fig. 3 can be done with standard mobile lPv6. The MN however uses its HoA2 as its care of address in the procedure. Note that in the prior art case (as described above), the MN uses its address in the foreign network as its Care-of Address.

Because the messages between the two HAs make use of existing security associations between the MN 120 and both HAs, it is not necessary to have a security relation between the two HAs.

Although the messages in the figure are numbered, it should be noted that the messages 301 to 304 and 305 to 308 could be sent and processed in parallel. The Binding Update can be sent when the MN 120 has received the HoT and CoT messages. Optionally, a flag in the BU messages can be set to request a Binding Acknowledgement (not shown), which follows the same path as the BU, but in the opposite direction.

The reason for these messages is to let the CN 124 obtain some reasonable assurance that a mobile node is in fact addressable at its claimed Care-of Address (CoA) as well as at its Home Address (HoA).

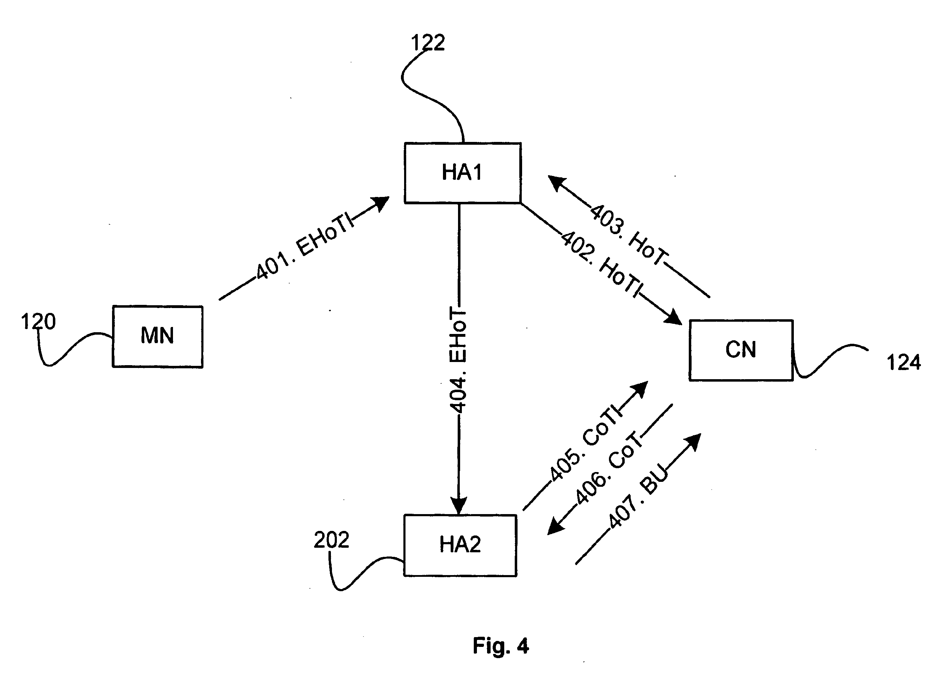

Fig. 4 shows the messages involved in this embodiment of the invention. The EHoTI message is a new message that functions as a trigger for the HA1 122 to start the RO process with the CN 124. The contents of this message include all information and security related data to securely perform the RO process on behalf of the MN 120. This message and all others are explained in detail below.

### EHoTI (Extended Home Test Init)

This is the trigger from the MN 120 to the HA 122 that currently forwards the packets to and from the CN 124. Note that this message should be encrypted. The contents of this message includes:
- The CN node IP address,
- The HoA of the MN as registered at HA2 (i.e. the target HA)
- The HoA of the MN as registered at HA1

This can be explicitly written in a field in the EHoTi packet or taken from the source address of the packet.

Since the network is performing the final Binding Update message on behalf of the MN, various options normally set by the MN, must already be included in this EHoTI message. See RFC 3775 for all options used in a BU. One example is the optional request for a Binding Acknowledgement to be returned upon receipt of the BU. Authentication information:

The purpose of this is that HA2 should later be able to check the authenticity and the integrity of the request (the items 1, 2 and 4 in this list are later forwarded by HA1 to HA2). This is needed to encounter denial of service (DoS) attacks and provides security against false binding updates from malicious nodes.

One way to achieve the authenticity is to digitally sign the data in the EHoTI message using the security key from the security association between MN and HA2. To encounter a replay attack, a sequence number or timestamp should be included in the digital signature of the data, so that HA2 can detect a replay attack. For example, after receiving an EHoTI from an MN with sequence number X, HA2 should only accept higher sequence numbers. X can initially be zero, and additional care should be taken when X wraps around because of the finite range of X.

So the whole EHoTI message is secured by using the security association between MN and HA1, and the part that will be later forwarded by HA1 to HA2 is additionally secured using the message security association between MN and HA2.

Upon reception of the EHoTI packet at the HA 122, the HA 122 stores the information in the packet for later use, and creates a MIP standard conform HoTI message and sends this message to the CN 124. This means that the HA 122 creates the cookie C0 (on behalf of the MN 120), which is also stored and used in the HoTI packet.

### HoTI (Home Test Init)

The HoTI message is generated by HA1 122 and uses the HoA1 of the MN 120 as the source address. Upon reception at the CN 124, the CN cannot see the difference between this message and a HoTI that was truly originated at a MN 120.

The CN 124 normally processes the HoTI and generates a standard HoT message with destination HoA1 of the MN 120.

### HoT (Home Test) and EHoT (Extended Home Test)

The HA 122 must intercept the HoT messages destined for the MNs under its administration. Based on the stored information the HA 122 verifies the correctness of the HoT (as a normal MN would do) and if correct it generates a new message type the EHoT. This message contains information from the corresponding original EHoTI from the MN 120 and the HoT message from the CN 124, as shown below:
- Home Keygen Token Taken from the HoT message and copied in the EHoT
- Index to the home nonce Taken from the HoT message, to allow easier finding of the appropriate nonce by the CN.
- MN's home address as registered at HA1
- MN's home address as registered at HA2 Taken from the EHoTI
- Authentication data

As contained within the EHoTI message, that was generated by the MN and destined for HA2. See the EHoTI description.

This EHoT message is sent to HoA2, i.e., the home address of the MN 120.

HA2 202 must intercept the EHoT message, which is addressed to the MN's HoA2. Once this message is intercepted, the home agent 202 must verify the authenticity, using the already existing security association between MN 120 and HA2 202.

If this check is successful, HA2 202 now initiates the CoTI-CoT procedure on behalf of the MN 120, similar to the HoTI-HoT procedure performed at HA1 122.

The CoTI is created by HA2 202; it therefore generates a cookie that the CN 124 returns later in the CoT message. The CN 124 also generates a token that is based on the care-of address. The destination address of the CoT message is HoA2 202. Again, this message must be intercepted by HA2 202.

Based on the information contained in the EHoT message and in the CoT reply from the CN 124, HA2 202 has now all the data to construct a valid binding update to send to the CN 124.

If the MN 120 indicated (by setting a flag in the EHoTI, and later copied into the BU) that it wants a Binding Acknowledgement (BA) from the CN 124, then this BA message will be handled as a normal data packet for the MN 122: the BA is sent to HoA2, intercepted by the HA2 202 and forwarded to the MN 120. Note that HAs only intercept packets for a MN if that MN is not on its home link (i.e. away from home). The exception are the EHoTI and EHoT, HoT and CoT messages, these must always be intercepted in the current invention.

Since the HAs must intercept the HoT and CoT messages, they must have a way to distinguish between standard RO and RO as used in this invention. This can be accomplished by checking if the returned cookie is a cookie that was generated by the HA itself.

As security is an important issue in Mobile IPv6, it is pointed out that the following security aspects are addressed by the invention as described above:
- Authentication of Binding Updates: Only bindings from the correct MN should be accepted. Note that mobile identification is not a goal, as this is not a goal in standard Mobile IP RR, either;
- Resist Denial of Service (DoS) attacks; and
- Only nodes between correspondent node and home network can disrupt traffic.

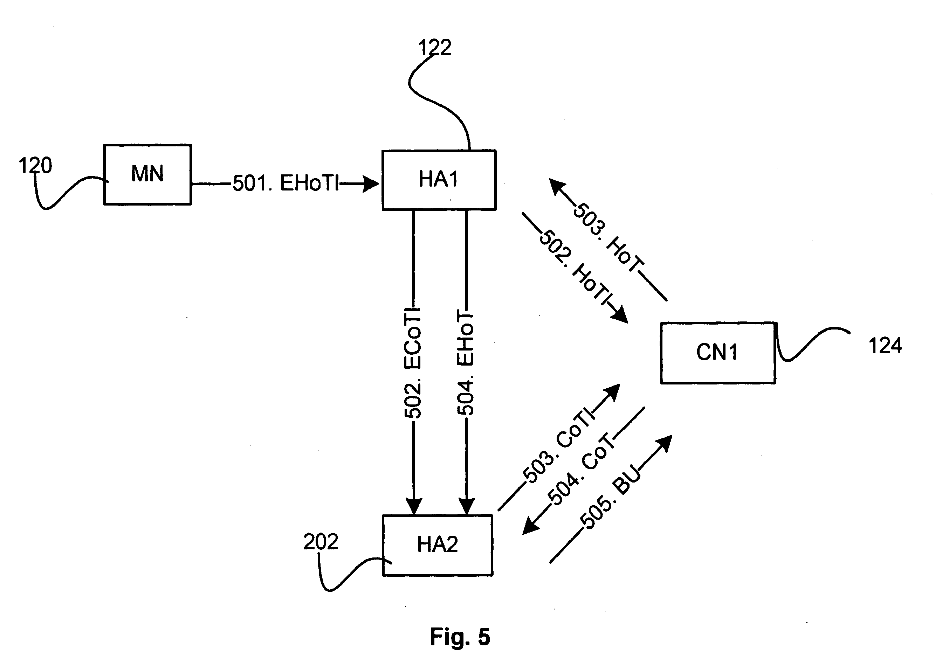

In a further embodiment of the invention parallelization of some of the messaging described above is described. As explained above, the care-of address test is performed after the home address test. Parallelization of these tests is possible, as it is in standard MIP. This embodiment needs one additional signalling message in the network (ECoTI, see Fig. 5) to accomplish this. The extra message (ECoTI) contains a part of the information from the original EHoT message, and upon reception at HA2 202, this ECoTI message functions as a trigger to initiate the care-of address test.

In summary, the two embodiments described above are functionally equal, only the information in the original EHoT message is distributed over two messages in the second embodiment. There are multiple options to accomplish this, depending which of the two messages forwards the information from the MN 120 to HA2 202. What is important is the authenticity and integrity of both messages, and to prevent replay attacks. This can be accomplished in the same way as in the base solution.

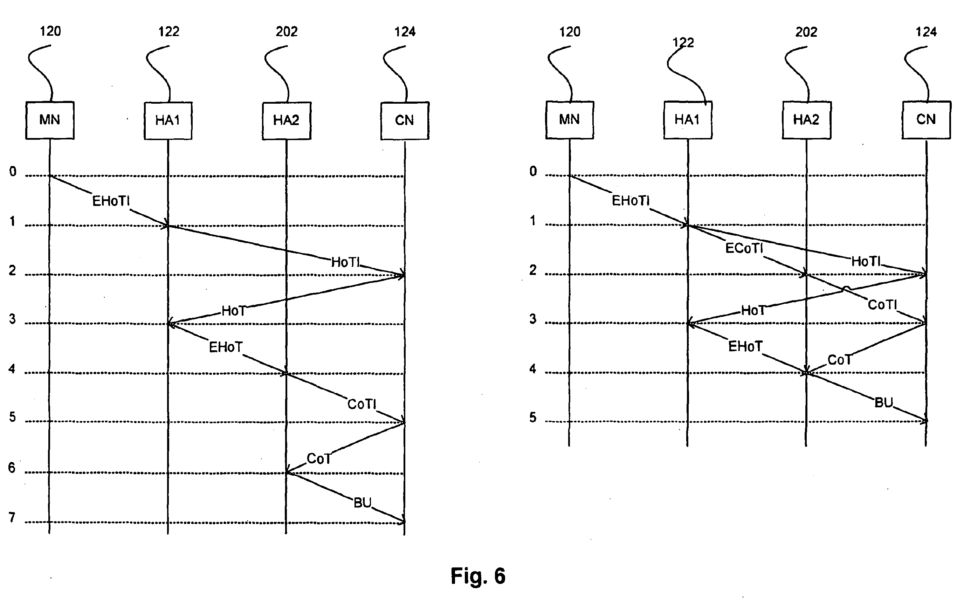

Fig. 6 illustrates the difference between the parallel and serial method. Clearly, the parallel method saves time at the cost of one more signalling message between HA1 122 and HA2 202.

In the following embodiment the case of multiple correspondent nodes is described.

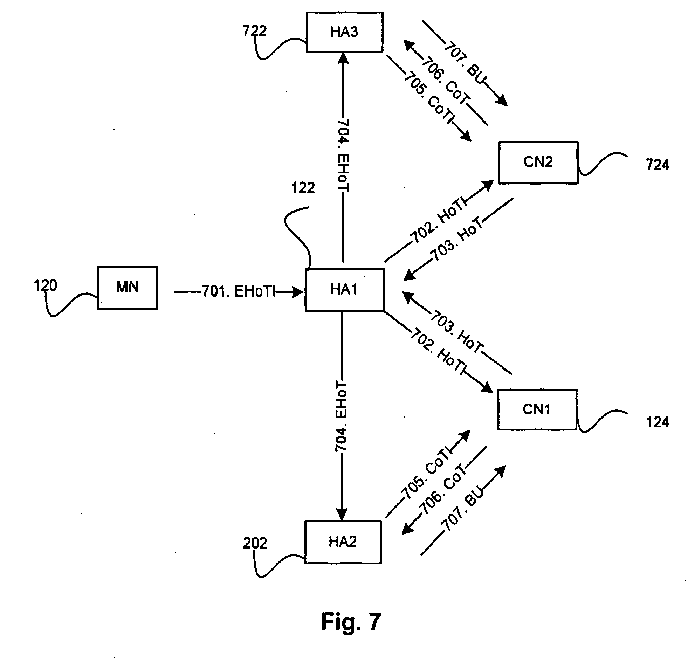

The Binding Update needs to be performed for all CNs independently and needs to be repeated every 7 minutes (this is the default value as defined in Mobile IP). Because of this, it is beneficial to combine multiple route optimization processes. This is what is shown in Fig. 7, where the MN 120 triggers the RO process for two CNs with only one message. Note that in the figure, these CNs perform route optimization via different HAs (HA2 and HA3), but it may be the case that multiple CNs share the same HA. This does not have any impact on the method used in this embodiment.

Basically, all CN-specific fields in the EHoTI packet are now conceptually stored as a list, where each entry contains the fields needed for one CN. These fields are:
1. The CN IP address
2. The HoA of the MN as registered at HA2
3. Binding Update Options
4. Authentication Information (as in normal EHoTI)

A variation of the invention is to use mechanisms currently under consideration at the IETF Monami working group. The work in this group deals with the possibility to register multiple care-of addresses at the same HA. With filter rules at the HA, different traffic flows could be forwarded to different care-of addresses of the same MN. Such a mechanism could be used to optimize the route optimization process in a similar way as in a previous of this invention. The advantage of this approach is that probably no changes to HA1 would be necessary.

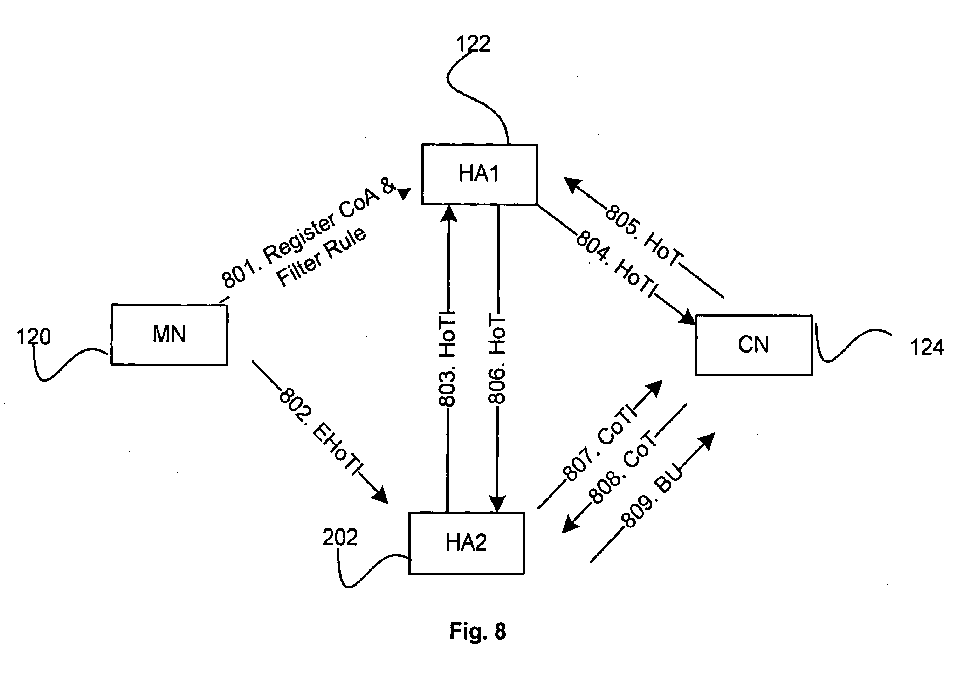

Fig. 8 illustrates the idea; assumed is that the MN already registered at both HAs. The first step is that the MN registers its HoA2 as an additional CoA at HA1. In addition, a filter rule should be activated that forwards the HoT message from the CN to the HoA2 address. Without this rule, the HoT 806 message would be forwarded to the MN, which is not wanted.

After installing the filter rule, the MN sends an EHoTI message to HA2. Although this message is not identical to the one used in the main invention, the principle remains the same. It functions as a trigger to HA2 to start the return routability test. In this case HA2, and only HA2, acts on behalf of the MN. All further messages can be standard-conform return routability messages. Note that this became possible because of the filter rule at HA1.

Another embodiment of the invention relates to the implementation of the above described various embodiments using hardware and software. It is recognized that the various methods mentioned above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A. method for route optimisation between a mobile node and at least one correspondent node in a packet switched network, wherein a route via a first home agent is redirected via a second home agent, the method comprising the following steps:
a) sending (401) by the mobile node an extended home test initiation message comprising following information: authentication data, an address of the correspondent node, a first home address and a second home address;
b) receiving the extended home test initiation message by the first home agent;
c) sending (404) an extended home test message to the second home agent by the first home agent, the extended home test message comprising the information from the extended home test initiation message;
d) receiving the extended home test message by the second home agent; and
e) routing a communication between the mobile node and the at least one correspondent node via the second home agent.

2. The method according to claim 1, further comprising the following steps before step c):
storing the information from the extended home test initiation message by the first home agent;
sending (402) a home test initiation message to the at least one correspondent node by the first home agent using a first home address of the mobile node; and
intercepting (403) by the first home agent a home test message sent by the at least one correspondent node and verifying its correctness.

3. The method according to claim 2, wherein the extended home test message further comprises information from the home test message.

4. The method according to claim 1 or 3, further comprising the following steps before step e):
sending (405) by the second home agent a care-of test initiation message to the at least one correspondent node;
intercepting (406) by the second home agent a care-of test message addressed to the second home address, which was sent by the at least one correspondent node; and
sending (407) a valid binding update message to the at least one correspondent node.

5. The method according to any of claims 1 to 4, wherein the extended home test initiation message comprises values for options used in a binding update message.

6. The method according to any of claims 1 to 5, wherein messages between the mobile node, the first home agent, the second home agent and the correspondent node are encrypted.

7. The method according to any of claims 1 to 6, further comprising the step of digitally signing data in the extended home test initiation message using a security key from a security association between the mobile node and the second home agent.

8. The method according to claim 7, wherein the step of digitally signing comprises using a sequence number or a time stamp.

9. The method according to any of claims 1 to 8, further comprising the steps of:
receiving by the first home agent or the second home agent a returned cookie sent by the at least one correspondent node; and
checking by the first home agent or by the second home agent whether the returned cookie is the cookie that was generated by the first home agent or the second home agent, respectively.

10. The method according to any of claims 1 to 9, wherein the step of sending the home test initiation message is performed simultaneously with sending by the first home agent an extended care-of test initiation message to the second home agent.

11. The method according to claims 2 and 4 wherein the steps of intercepting by the first home agent the home test message and sending by the second home agent the care-of test initiation message are performed simultaneously and step c) and intercepting by the second home agent a care-of test message are performed simultaneously.

12. The method according to claims 2 or 3, wherein the step of storing the information from the extended home test initiation message by the first home agent comprises storing the information in a table, wherein each entry of the table comprises fields needed for each of the at least one correspondent nodes.

13. The method according to claim 12, wherein the fields of the table comprise an address of a correspondent node, the second home address, binding update options and authentication information.

14. A mobile node (120) adapted for route optimisation between the mobile node (120) and at least one correspondent node (124) in a packet switched network, wherein a route via a first home agent (122) is redirected via a second home agent (202), the mobile node **characterised by**
transmission means adapted to send an extended home test initiation message comprising following information: authentication data, an address of the correspondent node, a first home address and a second home address.

15. The mobile node (120) according to claim 14, wherein the extended home test initiation message comprises values for options used in a binding update message.

## Patentansprüche

1. Verfahren für Routen-Optimierung zwischen einem mobilen Knoten und wenigstens einem korrespondierenden Knoten in einem Paketvermittlungsnetz, wobei eine über einen ersten Home Agent verlaufende Route über einen zweiten Home Agent umgeleitet wird und das Verfahren die folgenden Schritte umfasst:
a) Senden (401) einer EHOTI-Nachricht (extended home test initiation message) durch den mobilen Knoten, die die folgenden Informationen umfasst:
Authentifizierungsdaten, eine Adresse des korrespondierenden Knotens, eine erste Heimatadresse und eine zweite Heimatadresse;
b) Empfangen der EHOTI-Nachricht durch den ersten Home Agent;
c) Senden einer EHOT-Nachricht (extended home test message) zu dem zweiten Home Agent durch den ersten Home Agent, wobei die EHOT-Nachricht die Informationen aus der EHOTI-Nachricht umfasst;
d) Empfangen der EHOT-Nachricht durch den zweiten Home Agent; und
e) Routing einer Kommunikation zwischen dem mobilen Knoten und dem wenigstens einen korrespondierenden Knoten über den zweiten Home Agent.

2. Verfahren nach Anspruch 1, das des Weiteren die folgenden Schritte vor Schritt c) umfasst:
Speichern der Informationen aus der EHOTI-Nachricht durch den ersten Home Agent;
Senden (402) einer HOTI-Nachricht (home test initiation message) zu dem wenigstens einen korrespondierenden Knoten durch den ersten Home Agent unter Verwendung einer ersten Heimatadresse des mobilen Knotens; und
Abfangen (403) einer durch den wenigstens einen korrespondierenden Knoten gesendeten HOT-Nachricht (home test message) durch den ersten Home Agent und Verifizieren ihrer Richtigkeit.

3. Verfahren nach Anspruch 2, wobei die EHOT-Nachricht des Weiteren Informationen aus der HOT-Nachricht umfasst.

4. Verfahren nach Anspruch 1 oder 3, das die folgenden Schritte vor Schritt e) umfasst:
Senden (405) einer COTI-Nachricht (care-of test initiation message) zu dem wenigstens einen korrespondierenden Knoten durch den zweiten Home Agent;
Abfangen (406) einer COT-Nachricht (care-of test message), die an die zweite Heimatadresse gerichtet ist, die durch den wenigstens einen korrespondierenden Knoten gesendet wurde, durch den zweiten Home Agent; und
Senden (407) einer gültigen Binding-Update-Nachricht zu dem wenigstens einen korrespondierenden Knoten.

5. Verfahren nach einem der Ansprüche 1 bis 4, wobei die EHOTI-Nachricht Werte für Optionen umfasst, die in einer Binding-Update-Nachricht verwendet werden.

6. Verfahren nach einem der Ansprüche 1 bis 5, wobei Nachrichten zwischen dem mobilen Knoten, dem ersten Home Agent, dem zweiten Home Agent und dem korrespondierenden Knoten verschlüsselt werden.

7. Verfahren nach einem der Ansprüche 1 bis 6, das des Weiteren den Schritt des digitalen Signierens von Daten in der EHOTI-Nachricht unter Verwendung eines Sicherheitsschlüssels von einer Sicherheitsverknüpfung zwischen dem mobilen Knoten und dem zweiten Home Agent umfasst.

8. Verfahren nach Anspruch 7, wobei der Schritt des digitalen Signierens Verwenden einer Sequenz-Zahl oder eines Zeitstempels umfasst.

9. Verfahren nach einem der Ansprüche 1 bis 8, das des Weiteren die folgenden Schritte umfasst:
Empfangen eines durch den wenigstens einen korrespondierenden Knoten gesendeten zurückgeführten Cookies durch den ersten Home Agent oder den zweiten Home Agent; und
Prüfen, ob das zurückgeführte Cookie das Cookie ist, das durch den ersten Home Agent bzw. den zweiten Home Agent erzeugt wurde, durch den ersten Home Agent oder den zweiten Home Agent.

10. Verfahren nach einem der Ansprüche 1 bis 9, wobei der Schritt des Sendens der HOTI-Nachricht simultan zum Senden einer ECOTI-Nachricht (extended care-of test initiation message) durch den ersten Home Agent zu dem zweiten Home Agent durchgeführt wird.

11. Verfahren nach den Ansprüchen 2 und 4, wobei die Schritte des Abfangens der HOT-Nachricht durch den ersten Home Agent und des Sendens der COTI-Nachricht durch den zweiten Home Agent simultan durchgeführt werden und Schritt c) sowie Abfangen einer COT-Nachricht durch den zweiten Home Agent simultan durchgeführt werden.

12. Verfahren nach den Ansprüchen 2 oder 3, wobei der Schritt des Speicherns der Informationen aus der EHOTI-Nachricht durch den ersten Home Agent Speichern der Informationen in einer Tabelle umfasst, wobei jeder Eintrag der Tabelle Felder umfasst, die für jeden von dem wenigstens einen korrespondierenden Knoten benötigt werden.

13. Verfahren nach Anspruch 12, wobei die Felder der Tabelle eine Adresse eines korrespondierenden Knotens, die zweite Heimatadresse, Binding-Update-Optionen und Authentifizierungsinformationen umfassen.

14. Mobiler Knoten (120), der zur Routen-Optimierung zwischen dem mobilen Knoten (120) und wenigstens einem korrespondierenden Knoten (124) in einem Paketvermittlungsnetz eingerichtet ist, wobei eine über einen ersten Home Agent (122) verlaufende Route über einen zweiten Home Agent (202) umgeleitet wird und der mobile Knoten **gekennzeichnet ist durch**:
eine Sendeeinrichtung, die so eingerichtet ist, dass sie eine EHOTI-Nachricht (extended home test initiation message) sendet, die die folgenden Informationen umfasst:
Authentifizierungsdaten, eine Adresse des korrespondierenden Knotens, eine erste Heimatadresse und eine zweite Heimatadresse.

15. Mobiler Knoten (120) nach Anspruch 14, wobei die EHOTI-Nachricht Werte für Optionen umfasst, die in einer Binding-Update-Nachricht (binding update message) verwendet werden.

## Revendications

1. Procédé d'optimisation de routage entre un noeud mobile et au moins un noeud correspondant dans un réseau à commutation de paquets, dans lequel un routage via un premier agent d'origine est redirigé via un second agent d'origine, le procédé comprenant les étapes suivantes :
a) envoi (401) par le noeud mobile d'un message de mise en route d'un test d'origine étendu comprenant l'information suivante : des données d'authentification, une adresse du noeud correspondant, une première adresse d'origine et une seconde adresse d'origine ;
b) réception d'un message de mise en route d'un test d'origine étendu par le premier agent d'origine ;
c) envoi (404) d'un message de test d'origine étendu au second agent d'origine par le premier agent d'origine, le message de test d'origine étendu comprenant l'information du message de mise en route d'un test d'origine étendu ;
d) réception du message de test d'origine étendu par le second agent d'origine ; et
e) routage d'une communication entre le noeud mobile et l'au moins un noeud correspondant via le second agent d'origine.

2. Procédé selon la revendication 1, comprenant en outre les étapes suivantes avant l'étape c) :
stockage de l'information du message de mise en route d'un test d'origine étendu par le premier agent d'origine ;
envoi (402) d'un message de mise en route d'un test d'origine à l'au moins un noeud correspondant par le premier agent d'origine en utilisant une première adresse d'origine du noeud mobile ; et
interception (403) par le premier agent d'origine d'un message de test d'origine envoyé par l'au moins un noeud correspondant et vérification de son exactitude.

3. Procédé selon la revendication 2, dans lequel le message de test d'origine étendu comprend en outre de l'information concernant le message de test d'origine.

4. Procédé selon la revendication 1 ou 3, comprenant en outre les étapes suivantes avant l'étape e) :
envoi (405) par le second agent d'origine d'un message de mise en route d'un test de prise en charge à l'au moins un noeud correspondant ;
interception (406) par le second agent d'origine d'un message de test de prise en charge adressé à la seconde adresse d'origine, envoyé par l'au moins un noeud correspondant ; et
envoi (407) d'un message de mise à jour de liaison valable à l'au moins un noeud correspondant.

5. Procédé selon l'une quelconque des revendications 1 à 4, dans lequel le message de mise en route d'un test d'origine étendu comprend des valeurs pour des options utilisées dans un message de mise à jour de liaison.

6. Procédé selon l'une quelconque des revendications 1 à 5, dans lequel les messages entre le noeud mobile, le premier agent d'origine, le second agent d'origine et le noeud correspondant sont chiffrés.

7. Procédé selon l'une quelconque des revendications 1 à 6, comprenant en outre l'étape de signature numérique de données dans le message de mise en route d'un test d'origine étendu en utilisant une clé de sécurité d'une association de sécurité entre le noeud mobile et le second agent d'origine.

8. Procédé selon la revendication 7, dans lequel l'étape de signature numérique comprend l'utilisation d'un numéro de séquence ou d'un horodatage.

9. Procédé selon l'une quelconque des revendications 1 à 8, comprenant en outre les étapes suivantes :
réception par le premier agent d'origine ou le second agent d'origine d'un cookie renvoyé par l'au moins un noeud correspondant ; et
vérification par le premier agent d'origine ou par le second agent d'origine du fait que le cookie renvoyé est ou
non le cookie généré, respectivement, par le premier agent d'origine ou le second agent d'origine.

10. Procédé selon l'une quelconque des revendications 1 à 9, dans lequel l'étape d'envoi du message de mise en route d'un test d'origine est réalisée simultanément avec l'envoi par le premier agent d'origine d'un message de mise en route d'un test de prise en charge étendu au second agent d'origine.

11. Procédé selon les revendications 2 et 4, dans lequel les étapes d'interception par le premier agent d'origine du message de test d'origine et d'envoi par le second agent d'origine du message de mise en route d'un test de prise en charge sont effectuées simultanément, et dans lequel l'étape c) et l'interception par le second agent d'origine d'un message de test de prise en charge sont effectuées simultanément.

12. Procédé selon la revendication 2 ou 3, dans lequel l'étape de stockage de l'information du message de mise en route d'un test d'origine étendu par le premier agent d'origine comprend le stockage de l'information dans une table, où chaque entrée de la table comprend des champs requis pour chacun des au moins un noeuds correspondants.

13. Procédé selon la revendication 12, dans lequel les champs de la table comprennent une adresse d'un noeud correspondant, la seconde adresse d'origine, des options de mise à jour de liaison et de l'information d'authentification.

14. Noeud mobile (120) adapté pour l'optimisation de routage entre le noeud mobile (120) et au moins un noeud correspondant (124) dans un réseau à commutation de paquets, dans lequel un routage via un premier agent d'origine (122) est redirigé via un second agent d'origine (202), le noeud mobile étant **caractérisé par** un moyen de transmission adapté pour envoyer un message de mise en route d'un test d'origine étendu comprenant l'information suivante : des données d'authentification, une adresse du
noeud correspondant, une première adresse d'origine et une seconde adresse d'origine.

15. Noeud mobile (120) selon la revendication 14, dans lequel le message de mise en route d'un test d'origine étendu comprend des valeurs pour des options utilisées dans un message de mise à jour de liaison.
